# EUROPÄISCHE PATENTSCHRIFT

(11) **EP 0 317 727 B1**
(45) Veröffentlichungstag und Bekanntmachung des Hinweises auf die Patenterteilung: **11.08.1993**
(21) Anmeldenummer: 88115426.4
(22) Anmeldetag: 21.09.1988
(51) Int. Cl.: B60G 7/02, B62D 17/00

(54) **Hinterachsaufhängung für ein Kraftfahrzeug**
Motor vehicle rear wheel suspension
Suspension arrière pour véhicule automobile

(30) Priorität: 27.11.1987 DE 3740310
(43) Veröffentlichungstag der Anmeldung: 31.05.1989
(73) Patentinhaber: Dr.Ing.h.c. F. Porsche Aktiengesellschaft, 70435 Stuttgart (DE)
(72) Erfinder: Kunert, Reinhard, D-7251 Weissach-Flacht (DE); Germano, Francesco, D-7120 Bietigheim-Bissingen (DE); Stotz, Erich, D-7053 Kernen (DE); Kroniger, Wilhelm, Dipl.-Ing., D-7251 Friolzheim (DE)

(56) Entgegenhaltungen:
- EP-A- 0 083 183
- DE-A- 2 365 798
- DE-A- 3 100 701
- DE-A- 3 139 792
- DE-A- 3 242 930
- DE-B- 1 151 740
- DE-B- 2 645 272
- DE-U- 6 948 197
- FR-A- 1 332 032
- FR-A- 2 325 529
- FR-A- 2 355 683
- FR-A- 2 366 947
- GB-A- 1 223 471
- GB-A- 2 177 983
- ATZ AUTOMOBILTECHNISCHE ZEITSCHRIFT, Band 79, Nr. 9, 1977, Seiten 370-374,Stuttgart, DE; "Einzelheiten der Fahrwerksentwicklung"
- PATENT ABSTRACTS OF JAPAN, Band 6, Nr. 126 (M-142)[1004], 10. Juli 1982;& JP-A-57 51 507 (TOYO KOGYO K.K.) 26-03-1982
- PATENT ABSTRACTS OF JAPAN, Band 11, Nr. 1 (M-550)[2448], 6. Januar 1987;& JP-A-61 181 706 (HONDA MOTOR CO., LTD) 14-08-1986

## Beschreibung

Die Erfindung bezieht sich auf eine Hinterachsaufhängung für ein Kraftfahrzeug nach dem Oberbegriff des Anspruchs 1.

Aus der DE-OS 32 42 930 ist eine Hinterradaufhängung gemäß dem Oberbegriff des Anspruches 1 mit einem unmittelbar mit einem Radträger verbundenen Lenkerkörper bekannt geworden, der einen radinneren und einen radäußeren Lenkerarm umfaßt. Der radäußere Lenkerarm ist aufbauseitig in einem axial bewegbaren Lager gehalten, wobei der radinnere Lenkerarm in einem Gelenk abgestützt ist. Dieser Lenkerarm besteht aus einem elastisch am Lenkerkörper gehaltenen Verbindungsglied mit einer vertikalen Drehachse, so daß bei auf das Rad einwirkenden Kräften eine elastokinematische Radstellungsänderung erfolgen kann. Mit einer gleichen Wirkungsweise ist aus der DE-PS 26 45 272 eine Radaufhängung bekannt geworden, deren radäußerer Lenkerarm eine Steuerschwinge umfaßt und deren radinnerer Lenkerarm aus einem in Querrichtung angeordneten biegeelastischem Federblatt besteht.

Aufgabe der Erfindung ist es, eine verbesserte Hinterachsaufhängung für ein Kraftfahrzeug zu schaffen, mit der eine Einstellung der Rad-Vorspur und des Radsturzes in einfacher Weise möglich ist und bei der das Rad unter der Einwirkung von Kräften bei Geradeaus- und Kurvenfahrt elastokinematisch in Richtung Vor- und Nachspur definiert verstellbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung im wesentlichen erzielten Vorteile bestehen darin, daß eine Radaufhängung geschaffen wird, die das Fahrzeugrad unter der Einwirkung von Kräften spurkorrigierend verstellt. So erfolgt im Zusammenspiel des aufbauseitigen Steuerlagers des radäußeren starren Lenkerarmes mit dem radinneren als Federstrebe ausgebildeten Lenkerarm eine definierte Vor-und Nachspurverstellung des Rades bei Kurven- und Geradeausfahrt, was durch die einen ideellen Radlenkpol bildenden aufbauseitigen Gelenke steuerbar ist.

Der radinnere Lenker umfaßt eine endseitige am Fahrzeugaufbau in einem Gelenk gehaltene Federstrebe, die mit einem starren Lenkerarm, der einteilig mit dem Lenkerkörper ausgeführt ist, über eine Rad- Einstellvorrichtung verbunden wird. Die Federstrebe ist relativ kurz ausgeführt und weist vorzugsweise eine derartige Form auf, daß über die gesamte Länge der Federstrebe eine den auftretenden Belastungen über diese Länge entsprechende Festigkeit zugeordnet ist, wobei diese Dimensionierung unter dem Gesichtspunkt der maximalen Elastizität erfolgt.

Eine elastische Radverstellung mit einer Begrenzung während der Fahrt erfolgt über ein aufbauseitiges Steuerlager am radäußeren Lenkerarm, das vorzugsweise mit Axialanschlägen versehen ist und den Radvorspur- und den Radnachspurwinkel gezielt begrenzt. Damit die Verstellung des Rades nur in Axialrichtung des Lagers erfolgen kann, weist es in Axialrichtung eine weichere Kennung als in Radialrichtung auf.

Das Gelenk des radinneren Lenkers ist vorzugsweise als Kugelgelenk ausgeführt, das zwischen einer äußeren Lagerschale und der Kugel eine elastische Schicht aufweist. Dieses Gelenk bildet im wesentlichen einen Drehpol für die Federstrebe des Radführungsgliedes.
Zwischen der elastischen Federstrebe und dem anschließenden starren Teil des Lenkers ist die Rad-Einstellvorrichtung angeordnet, die gleichzeitig zur Befestigung der Federstrebe am anschließenden starren Lenkerarm dient. Diese Vorrichtung weist vorzugsweise von der Innenseite her zu verstellende Exzenterelemente zur Vorspur- und Sturzeinstellung auf. Das Exzenterelement zur Sturzeinstellung dient gleichzeitig mit weiteren Schrauben zur Befestigung der Federstrebe am Lenkerkörper.

Bei einer Radaufhängung mit einem schräg zur Fahrzeuglängsmittelachse angestellten Lenkerarm ist es bei beengten Platzverhältnissen meist schwierig, einen Lenkerarm größerer Abmessung wie z. B. aus Guß oder dergleichen so anzuordnen, daß keine anderen Aufbaubaugruppen wie z. B. die Sitzmulde usw. behindert werden. Durch die relativ schmale, hochkant angeordnete Federstrebe, wird im Bereich dieses Lenkerteils nur ein geringer Platz beansprucht, so daß die Aufbaugruppen keine wesentliche Einengung erfahren.

Ein Ausführungsbeispiel der Erfindung ist in der Zeichnung dargestellt und wird im folgenden näher beschrieben.

Es zeigen:
- Fig. 1: eine Draufsicht auf eine Hinterachsaufhängung,

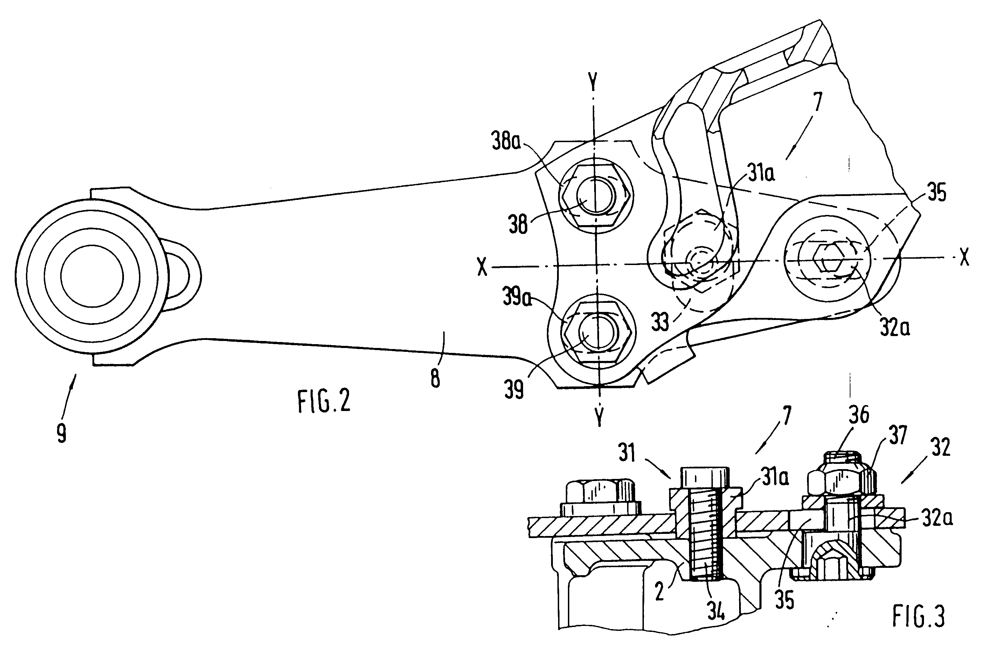

- Fig. 2: eine Seitenansicht auf eine Federstrebe mit Rad- Einstellvorrichtung,
- Fig. 3: eine Draufsicht auf eine Radeinstellvorrichtung,
- Fig. 4: eine Prinzipdarstellung der Radaufhängung bei Geradeausfahrt,
- Fig.5: eine Prinzipdarstellung der Radaufhängung bei Geradeausfahrt und während eines Bremszustandes,
- Fig. 6: eine Prinzipdarstellung der Radaufhängung bei Kurvenfahrt,
- Fig. 7: eine Prinzipdarstellung der Radaufhängung bei Geradeausfahrt und im Beschleunigungszustand und
- Fig. 8: eine Ausführung eines aufbauseitigen Steuerlagers des radäußeren Lenkerarmes.

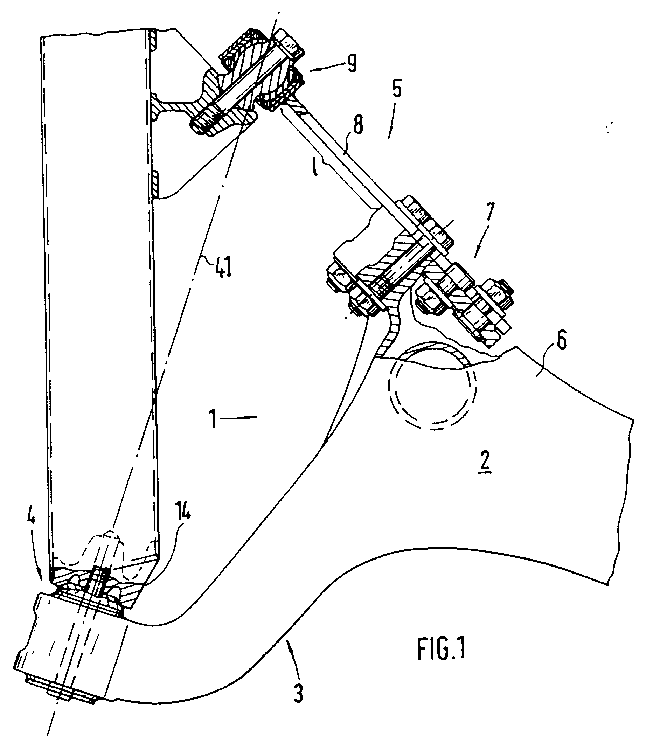

Das Radführungsglied 1 gemäß Fig. 1 umfaßt einen Lenkerkörper 2 mit dem ein radäußerer erster Lenkerarm 3 einteilig ausgeführt ist und der über ein Steuerlager 4 aufbauseitig angelenkt wird. Ein radinnerer zweiter Lenkerarm 5 umfaßt einen mit dem Lenkerkörper 2 einteiliges starres Lenkerteil 6, mit dem über eine Einstellvorrichtung 7 ein als elastische Federstrebe 8 ausgebildetes weiteres Lenkerteil verbunden ist, das endseitig über ein Gelenk 9, das als Kugelgelenk ausgeführt sein kann, aufbauseitig abgestützt.

Die Federstrebe 8 ist hochkant angeordnet und in Querrichtung elastisch auslenkbar und zum radäußeren Lenkerarm 3 divergierend angeordnet, wobei sie eine geringere Länge l als der anschließende Lenkerteil 6 des Lenkerarmes 5 aufweist. Zwischen der Einstellvorrichtung 7 und dem aufbauseitigen Gelenk 9 ist die Federstrebe 8 konisch zulaufend derart ausgeführt, daß über die ge-samte Länge eine gleiche Festigkeit bei einer maximalen Elastizität besteht.

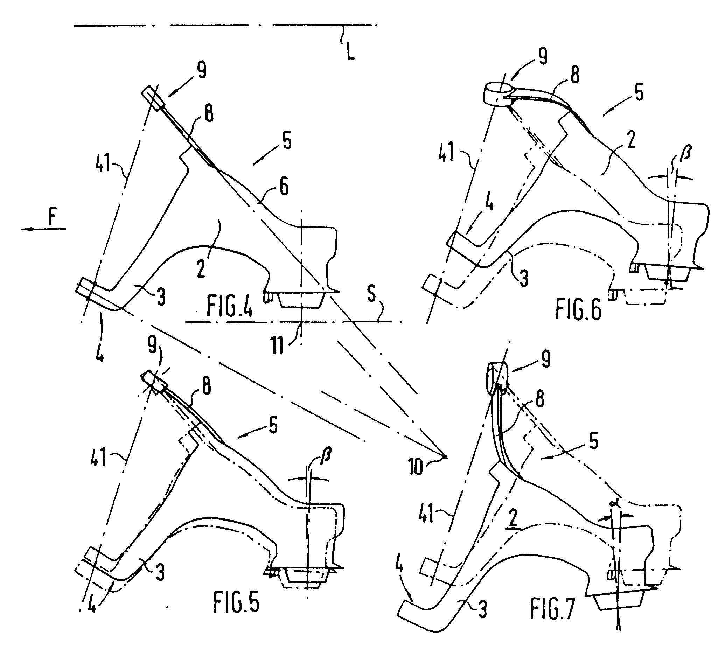

Die Radaufhängung ist in der Weise ausgelegt, daß durch die Lage des Steuerlagers 4 mit dem Lenker 3 und durch die Lage des Gelenkes 9 mit der Federstrebe 8 sich ein ideeller Radlenkpol 10 (Fig. 4) ergibt - der in Fahrtrichtung F gesehen - hinter der Raddrehachse 11 und außerhalb der Spurweite S liegt. Hierdurch wird bei auf das Rad einwirkenden Kräften, wie Brems-, Beschleunigungs- und Seitenkräften, eine elastokinematische Radstellungsänderung in Richtung Vor- und Nachspur erzielt.

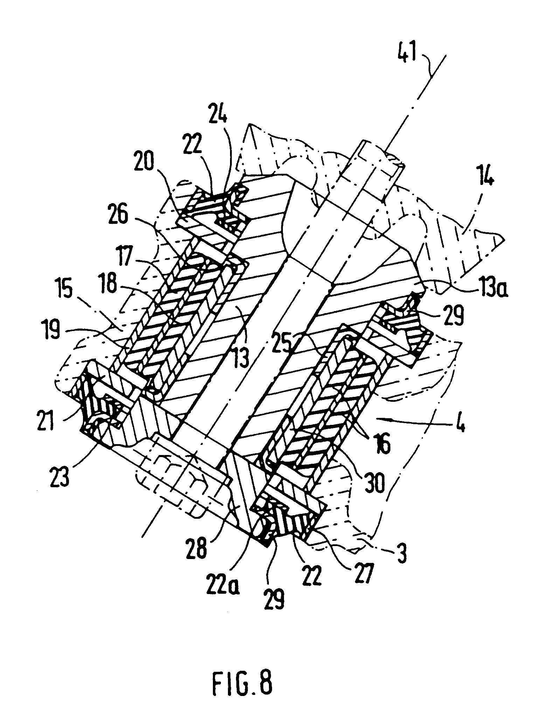

Das Steuerlager 4 (Fig. 8) dient im wesentlichen zur Begrenzung der Radverstellung bei auf das Rad einwirkenden Kräften und ist mittels einer Bundbuchse 13 an einem Querträger 14 des Fahrzeugaufbaus gehalten. Zwischen dieser Buchse 13 und dem Lenkerauge 15 beziehungsweise zwischen einer Außenschale 19 ist das eigentliche Lagerelement 16 angeordnet, welches aus einer doppelschichtigen Gummibuchse 17, 18 besteht. Zur Begrenzung von Axialbewegungen umfaßt das Steuerlager 4 Anschlagscheiben 20 und 21, die innerhalb des Lagerelements im Lenkerauge 15 gehalten sind. Sie sind gegenüberstehend von stirnseitig angeordneten elastischen und mit Abdicht- und Anschlagelementen 22 verbundenen Gleitscheiben 23, 24 vorgesehen. Diese Gleitscheiben 23 und 24 ermöglichen zusammen mit einer Gleitbuchse 25 beziehungsweise mit zwei achsgleich angeordneten Gleit-buchsen zwischen der Buchse 13 und den Gummibuchsen 17, 18, eine optimierte Verdrehbarkeit des Radführungs-gliedes 1 bei Federungsvorgängen, auch wenn die Anschlagscheibe 20 oder 21 anliegend zur Gleitscheibe 23 oder 24 steht. Die Gleitscheiben 23 und 24 dienen auch dazu, die Anschlagpuffer 22a der Abdicht- und Anschlagelemente 22 vor einem Abrieb zu schützen.

Durch die doppelschichtige Gummibuchse 17, 18 des Gleitlagers 4 mit einer Zwischenschale 26, wird eine gegenüber der Radialsteifigkeit weichere Verdreh- und Axialsteifigkeit erzielt.

Das elastische Abdicht- und Anschlagelement 22 ist zwischen einem Außenring 27 und einem an der Bundbuchse 13 abgestützten Befestigungsflansch 28 eingespannt. Im Abdichtelement 22 ist ein Stützring 29 angeordnet, der sich einerseits axial am Befestigungsflansch 28 und an der Buchse 13 abstützt und andererseits das Abdichtelement 22 radial elastisch auf dem Befestigungsflansch 28 hält. Das elastische Element 22 ist im Lagerauge 15 und auf der Bundbuchse 13 derart aufgepreßt, daß es bei Radeinfederungsbewegungen auf Verdrehschub und bei Kräften auf das Rad axial elastisch beanspruchbar ist. Das Element 22 ist zur Vermeidung von Überbeanspruchungen durch Verdrehspannungen mit dem Stützring - der auf seiner Innenfläche eine Gummierung aufweist - gegenüber dem Befestigungsflansch 28 und dem Flansch 13a der Buchse 13 verdrehbar. Zwischen den Gleitbuchsen 25 und den Gummibuchsen 17 und 18 kann ein Innenrohr 30 angeordnet sein. Nach einer weiteren Ausführung, die nicht näher dargestellt ist, kann dieses Innenrohr auch gleichzeitig als Gleitbuchse ausgebildet werden.

In den Fig. 4 bis 7 sind die möglichen Radverstellungen bei Geradeausfahrt und Kurvenfahrt während der Fahrzustände Bremsen, Beschleunigen und bei Seitenkraft im Prinzip dargestellt.

Fig. 4 zeigt ein Radführungsglied 1 mit einem linken Hinterrad in seiner Ausgangsstellung. In Fig. 5 ist das gleiche Radführungsglied in ausgezogenen Linien während eines Bremsvorgangs dargestellt. Über das Steuerlager 4 verschiebt sich das Radführungsglied 1 auf der Lagerachse 41 des Lagers 4, wobei sich gleichzeitig die Federstrebe 8 elastisch ausbiegt und das Fahrzeugrad eine Vorspurstellung mit dem Winkel β einnimmt.

In Fig. 6 ist das Radführungsglied 1 in ausgezogenen Linien während einer Kurvenfahrt unter der Einwirkung von Seitenkräften dargestellt. Das kurvenäußere Fahrzeugrad verstellt sich, wie dargestellt in Richtung Vorspur unter dem Winkel β.

In Fig. 7 ist das Radführungsglied 1 während eines Beschleunigungsvorgangs dargestellt, bei dem sich das Rad in Richtung Nachspur unter dem Winkel verstellt.

Bei allen Fahrvorgängen gemäß der Fig. 5 bis 7 wird die Federstrebe 8 elastisch in Grenzen der Verschiebbarkeit des Steuerlagers 4 ausgelenkt, so daß durch eine entsprechende Dimensionierung die Verstellung des Radführungsgliedes 1 und des Fahrzeugrades innerhalb des Steuerlagers 4 und durch die Elastizität der Federstrebe 8 eine gewünschte Vor- und Nachspurverstellung des Fahrzeugrades in den verschiedenen Fahrzuständen erzielbar wird.

Die Rad- Einstellvorrichtung 7 des Radführungsgliedes umfaßt in einer horizontalen Ebene X-X angeordnete Exzenterelemente 31 und 32. Das eine Exzenterelement 32 dient zur Einstellung des Radsturzes und das weitere Exzenterelement 31 dient zur Einstellung der Radvorspur.

Das Exzenterelement 31 ist mit einer Exzenterhülse 31a in einem vertikalen Langloch 33 angeordnet und über eine Schraube 34 mit dem Lenkerkörper 2 verbunden. Das weitere Exzenterelement 32 weist einen Exzenterbolzen 32a an einer Schraube 36 auf, wobei der Exzenterbolzen 32a in einem horizontalen Langloch 35 angeordnet ist und über eine Mutter 37 mit dem Lenkerkörper 2 gesichert wird.

Über in einer senkrechten Ebene Y-Y angeordnete Befestigungsschrauben 38, 39 die in Langlöchern 38a und 39a der Federstrebe gehalten sind, sowie über die Schraube 36 des einen Exzenterelement 32 wird die Federstrebe mit dem Lenkerkörper 2 lösbar verbunden.

## Patentansprüche

1. Hinterachsaufhängung für ein Kraftfahrzeug mit einem unmittelbar am Radträger gehaltenen Radführungsglied, das einen ersten mit einem Lenkerkörper (2) einteilig ausgebildeten äußeren Lenkerarm (3) und einem zweiten inneren Lenkerarm (5) bestehend aus einem mit dem Lenkerkörper (2) einteiligen Lenkerteil (6) umfaßt und beide Lenkerarme (3 und 5) über elastische Gelenke (4, 9) am Fahrzeugaufbau angelenkt sind, wobei das eine aufbauseitige Gelenk (4) des ersten Lenkerarmes (3) - in bezug auf die Gelenkachse - als Steuerlager ausgeführt und längsnachgiebig ausgebildet ist und mit dem weiteren elastischen Gelenk (9) des zweiten Lenkerarmes (5) eine etwa quer zum Fahrzeug verlaufende Lenkerdrehachse (41) und einen ideellen Radlenkpol (10) hinter der Raddrehachse (11) und außerhalb der Spurweite (S) bildet, dadurch gekennzeichnet, daß das Radführungsglied (1) eine mit dem Lenkerkörper (2) über eine Rad-Einstellvorrichtung (7) verbundene und als Teil des inneren Lenkers (5) ausgebildete und schräg zur Fahrzeuglängsmittelachse (L) angestellte Federstrebe (8) umfaßt, die eine geringere Länge (1) als der anschließende starre Lenkerteil (6) des Lenkers (5) aufweist und elastisch auslenkbar ausgeführt ist.

2. Hinterachsaufhängung nach Anspruch 1, dadurch gekennzeichnet, daß die Federstrebe (8) aus einem zum aufbauseitigen Gelenk (9) hin konisch zulaufenden Träger mit einer über die gesamte Länge gleichen Festigkeit mit einer definiert auf die Radkräfte abgestimmten Elastizität aufweist.

3. Hinterachsaufhängung nach den Ansprüchen 1 oder 2, dadurch gekennzeichnet, daß die Federstrebe (8) über in Langlöchern (38a, 39a) angeordnete Befestigungsschrauben (38, 39) verschieblich zum starren Lenkerteil (6)mit dem Lenkerkörper (2) verbunden ist und im Lenkerteil (6) Exzenterelemente (31, 32) der Radeinstellvorrichtung (7) gehalten sind, deren einer Exzenter (31) zur Vorspureinstellung in einem vertikalen Langloch (33) und deren anderer Exzenter (32) zur Sturzeinstellung in einem horizontalen Langloch (35) geführt ist.

4. Hinterachsaufhängung nach den Ansprüchen 1 oder 3, dadurch gekennzeichnet, daß die Exzenterelemente (31, 32) am freien Ende der Federstrebe (8) nebeneinander in einer horizontalen Ebene (X-X) angeordnet sind und daß das eine Exzenterelement (32) mit den in einer senkrechten Ebene (Y-Y) benachbart gelagerten Befestigungsschrauben (38, 39) als Spannelemente ausgebildet sind.

5. Hinterachsaufhängung nach Anspruch 1, dadurch gekennzeichnet, daß das Steuerlager (4) des äußeren Lenkerarms (3) ein Lagerelement (16) mit einer gegenüber einer Radialsteifigkeit weicher ausgelegten Verdreh- und Axialsteifigkeit umfaßt und auf einer aufbauseitig gehaltenen Bundbuchse (13) angeordnet und über eine im Lenkerauge (15) eingepreßte Außenschale (19) mit dem Lenker (3) verbunden ist und zwischen der Buchse (13) und der Schale (19) doppelschichtige, in Axialrichtung elastisch bewegbare Gummibuchsen (17, 18) vorgesehen sind.

6. Hinterachsaufhängung nach den Ansprüchen 1 oder 5, dadurch gekennzeichnet, daß das Lagerelement (16) zur Begrenzung von elastischen Axialbewegungen in Richtung Vor- und Nachspur Anschlagscheiben (20, 21) aufweist, die innerhalb des Lagerelements (16) im Lenkerauge (15) gehalten sind und gegenüberstehend einer stirnseitigen Gleitscheibe (23, 24) sitzen, die an einem zwischen einem Befestigungsflansch (28) und einem Außenring (27) eingespannten Abdicht- und Anschlagelementen (22) elastisch gehalten werden.

7. Hinterachsaufhängung nach den Ansprüchen 1, 5 oder 6, dadurch gekennzeichnet, daß das Lagerelement (16) zwischen der Bundbuchse (13) und den Gummibuchsen (17, 18) eine Gleitbuchse bzw. Gleitbuchsen (25) aufweist.

8. Hinterachsaufhängung nach den Ansprüchen 1, 5, 6 oder 7, dadurch gekennzeichnet, daß das Lagerelement (16) zwischen der Gleitbuchse (25) und den Gummibuchsen (17, 18) eine Hülse (30) aufweist.

## Claims

1. A rear-axle suspension for a motor vehicle, with a wheel-guide member which is held directly on the wheel support and which comprises a first outer support arm (3) formed integrally with a support-arm member (2) and a second inner support arm (5) comprising a support-arm part (6) integral with the support-arm member (2), and the two support arms (3 and 5) are articulated to the vehicle body by way of resilient joints (4, 9), wherein one joint (4) of the first support arm (3) on the body is constructed as a control bearing with respect to the joint axis is constructed so as to be yielding longitudinally and together with the further resilient joint (9) of the second support arm (5) forms a support-arm rotation axis (41) extending substantially transversely to the vehicle and an ideal wheel-steering centre (10) behind the wheel rotation axis (11) and outside the wheel base (S), **characterized in that** the wheel-guide member (1) comprises a telescopic leg (8) which is connected to the support-arm member (2) by way of a wheel-setting device (7) and is constructed as part of the inner support arm (5) and which is set obliquely to the longitudinal median axis (L) of the vehicle and has a shorter length (1) than the adjoining rigid part (6) of the support arm (5) and is made resiliently deflexible.

2. A rear-axle suspension according to Claim 1, **characterized in that** the telescopic leg (8) comprises (from)¹ a support extending in a tapered manner towards the joint (9) on the body with a strength equal over the entire length [and] with an elasticity adapted in a defined manner to the forces of the wheel.

3. A rear-axle suspension according to Claim 1 or 2, **characterized in that** the telescopic leg (8) is connected to the support-arm body (2) in a displaceable manner with respect to the rigid support-arm part (6) by way of fastening bolts (38, 39) arranged in elongate holes (38a, 39a) and eccentric members (31, 32) of the wheel-setting device (7) are held in the support-arm part (6), one eccentric (31) of the eccentric members (31, 32) being guided in a vertical elongate hole (33) for setting the toe-in and the other eccentric (32) being guided in a horizontal elongate hole (35) for setting the camber.

4. A rear-axle suspension according to Claim 1 or 3, **characterized in that** the eccentric members (31, 32) are arranged adjacent in a horizontal plane (X-X) at the free end of the telescopic leg (8), and one eccentric member (32) and the fastening bolts (38, 39) mounted adjacent in a vertical plane (Y-Y) are constructed as clamping members.

5. A rear-axle suspension according to Claim 1, **characterized in that** the control bearing (4) of the outer support arm (3) comprises a bearing member (16) with its torsional and axial rigidity made weaker than its radial rigidity and is mounted on a flange bushing (13) held on the body and is connected to the support arm (3) by way of an outer shell (19) pressed into the support-arm lug (15), and double-layered rubber bushings (17, 18) resiliently movable in the axial direction are provided between the bushing (13) and the shell (19).

6. A rear-axle suspension according to Claim 1 or 5, **characterized in that** the bearing member (16) has stop rings (20, 21) for limiting resilient axial movements in the toe-in and toe-out directions, the stop rings (20, 21) being held in the support-arm lug (15) inside the bearing member (16) and being arranged opposite a sliding ring (23, 24) at the front end held resiliently on a scaling and stop member (22) clamped between a fastening flange (28) and an outer ring (27).

7. A rear-axle suspension according to Claims 1, 5 or 6, **characterized in that** the bearing member (16) has a sliding bushing or bushings (25) between the flange bushing (13) and the rubber bushings (17, 18).

8. A rear-axle suspension according to Claims 1, 5, 6 or 7, **characterized in that** the bearing member (16) has a sleeve (30) between the sliding bushing (25) and the rubber bushings (17, 18).

## Revendications

1. Suspension arrière pour véhicule automobile, avec un organe de guidage de roues, maintenu directement sur le support de roue, comprenant un premier bras extérieur (3) réalisé d'un seul tenant avec un corps d'articulation (2), et un deuxième bras intérieur (5), composé d'une partie d'articulation (6) réalisée d'un seul tenant avec le corps d'articulation (2) et les deux bras (3) et (5) étant articulés sur la carrosserie du véhicule, par l'intermédiaire d'articulations élastiques (4, 9), l'articulation située côté carrosserie (4) du premier bras (3) étant réalisée -par rapport à l'axe d'articulation- sous forme de palier de commande et déformable longitudinalement et formant avec la deuxième articulation élastique (9) du deuxième bras (5), un axe de rotation (41) s'étendant à peu près transversalement par rapport au véhicule et un pôle d'articulation de roue imaginaire (10), situé derrière l'axe de rotation de roue (11), et à l'extérieur de la voie (S), caractérisée en ce que l'organe de guidage de roue (1) comprend un bras élastique (8), relié au corps d'articulation (2) par l'intermédiaire d'un dispositif de réglage de roue (7) et faisant partie du bras intérieur (5) et réglé obliquement par rapport à l'axe médian longitudinal du véhicule (L), le bras élastique (8) présentant une longueur (1) inférieure à la partie d'articulation rigide (6) connexe du bras (5) et réalisée de façon à pouvoir effectuer un débattement accompagné d'élasticité.

2. Suspension arrière selon la revendication 1, caractérisée en ce que le bras élastique (8) est composé d'un support, s'étendant de façon conique par rapport à l'articulation de côté carrosserie (9), avec une résistance identique sur toute la longueur, avec une élasticité définie, établie en fonction des efforts exercés sur les roues.

3. Suspension arrière selon la revendication 1 ou 2 caractérisée en ce que le bras élastique (8) est relié mobile, par rapport à la partie d'articulation rigide (6) avec le corps d'articulation (2), par l'intermédiaire de vis de fixation (38, 39) disposées dans des trous oblongs (38a,39a) et dans la partie d'articulation (6) sont fixés des éléments excentriques (31, 32) du dispositif de réglage de roue (7), dont un excentrique (31) est guidé en vue d'opérer un réglage de pincement des roues, dans un trou oblong vertical (33) et dont l'autre excentrique (32) est guidé en vue d'exercer un réglage de carrossage dans un trou oblong horizontal (35).

4. Suspension arrière selon la revendication 1 ou 3 caractérisée en ce que les éléments excentriques (31, 32) sont disposés les uns à côté des autres, dans un plan horizontal (X-X), à l'extrémité libre du bras élastique (8), et en ce qu'un élément excentrique (32), avec les vis de fixation (38, 39) montées voisines dans un plan vertical (Y-Y), sont réalisées à titre d'éléments de serrage.

5. Suspension arrière selon la revendication 1, caractérisée en ce que le palier de commande (4) du bras d'articulation extérieur (3) comprend un élément de palier (16) présentant une rigidité en rotation et axiale, souple par rapport à la rigidité radiale et est disposé sur un coussinet de liaison (13) fixé côté carosserie et relié au bras d'articulation (3), par l'intermédiaire d'un coussinet extérieur (19) enfoncé dans l'oeillet d'articulation (15), et entre le coussinet (13) et le coussinet (19) sont prévus des coussinets en caoutchouc (17, 18), à double couche et déplaçables élastiquement en direction axiale.

6. Suspension arrière selon la revendication 1 ou 5 caractérisée en ce que l'élément de palier (16) présente, en vue de limiter les mouvements axiaux élastiques en direction du pincement et de l'ouverture, des disques de butée (20, 21) fixés à l'intérieur de l'élément de palier (16), dans l'oeillet d'articulation (15) et placés en face d'un disque de glissement frontal (23, 24), maintenu élastiquement sur des éléments d'étanchéité et de butée (22), enserrés entre une bride de fixation (28) et une bague extérieure (27).

7. Suspension arrière selon la revendication 1, 5 ou 6 caractérisée en ce que l'élément de palier (16) présente, entre la douille de liaison (13) et les coussinets en caoutchouc (17, 18), une douille de glissement, ou des douilles de glissement (25).

8. Suspension arrière selon la revendication 1, 5, 6 ou 7 caractérisée en ce que l'élément de palier (16) présente une douille (30) entre la douille de glissement (25) et les douilles en caoutchouc (17, 18).
